# EUROPÄISCHE PATENTSCHRIFT

(11) **EP 1 127 911 B1**
(45) Veröffentlichungstag und Bekanntmachung des Hinweises auf die Patenterteilung: **09.03.2005**
(21) Anmeldenummer: 01101556.7
(22) Anmeldetag: 25.01.2001
(51) Int. Cl.: C08J 3/215, C08L 21/00

(54) **Verfahren zur Herstellung von russgefüllten Kautschukpulvern auf Basis wässriger Polymer-Latex-Emulsionen**
Process for the production of rubber powder filled with carbon black based on aqueous polymer-latex-emulsions
Procédé pour la fabrication de caoutchouc pulvérulent chargé de noir de carbone à partir d'émulsions aqueuses de latex (polymère)

(30) Priorität: 25.02.2000 DE 10008877
(43) Veröffentlichungstag der Anmeldung: 29.08.2001
(73) Patentinhaber: PKU Pulverkautschuk Union GmbH, 45764 Marl (DE)
(72) Erfinder: Görl, Udo, Dr., 45657 Recklinghausen (DE); Schmitt, Matthias, 69151 Neckargemünd (DE); Stober, Reinhard, Dr., 63594 Hasselroth (DE)

(56) Entgegenhaltungen:
- EP-A- 1 035 155
- EP-A- 1 095 961
- DE-A- 19 815 453
- DE-B- 1 280 545

## Beschreibung

Die Erfindung betrifft ein Verfahren zur Herstellung von feinteiligen Kautschukpulvern auf der Basis von Kautschuk-Latex-Emulsionen durch Ausfällen aus wasserhaltigen Mischungen und die so hergestellten Pulver.

Über Ziel und Zweck des Einsatzes von Pulverkautschuk sowie über mögliche Verfahren zu ihrer Herstellung sind eine Vielzahl von Publikationen erschienen.

Die Erklärung für das Interesse an pulverförmigen Kautschuk/Füllstoff-Batches ergibt sich zwangsläufig aus der Verarbeitungstechnik in der Gummiindustrie. Dort werden die Kautschukmischungen mit hohem Aufwand an Energie, Zeit und Personal hergestellt. Der Hauptgrund hierfür ist, dass der Rohstoff Kautschuk in Ballenform vorliegt und während dessen Verarbeitung große Mengen an aktiven Füllstoffen (Industrieruße, Kieselsäuren etc.) in die Kautschukphase mechanisch eingearbeitet und dispergiert werden müssen.

Dieser mechanische Knetprozess erfolgt in der Praxis in großen Innenmischern oder auf Walzwerken, i.d.R. in mehreren Verfahrensstufen. Zwischen den einzelnen Mischstufen wird die Mischung zwischengelagert und schließlich nach Zugabe der Vernetzungschemikalien als Fertigrohmischung auf Extruderanlagen oder Kalandern zu Halbzeugen (z.B. Laufstreifen) weiterverarbeitet.

Aus dieser aufwendigen Technik der Kautschukverarbeitung kann nur eine völlig neue Verarbeitungstechnologie herausführen.

Am geeignetsten wird schon seit langem die Pulverkautschuktechnologie erachtet. (Delphi Report "Künftige Herstellverfahren in der Gummiindustrie" Rubber Journal, Vol. 154, Nr. 11, 20-34 (1942). Sie kombiniert die Notwendigkeit des bereits inkorporierten Füllstoffs mit der besonderen Darreichungsform eines freifließenden, pulverförmigen Kautschukpulvers, geeignet für den Einsatz in kontinuierlichen Mischprozessen, wie sie in der Kunststoffindustrie seit vielen Jahren den Stand der Technik darstellt.

Die Herstellung des Pulverkautschuks erfolgt nach dem Stand der Technik durch Fällung aus einem Gemisch einer Füllstoffsuspension (z.B. Ruß oder Kieselsäure) und einer Kautschuk-Latex-Emulsion durch pH-Wert-Absenkung unter Zuhilfenahme entsprechender Brönsted- bzw. Lewissäuren (DE-PS 37 23 213 bzw. 37 23 214, DE-PS 28 22 148).

Als zwingend notwendig erachtet wird in allen diesen Patenten die Zugabe wasserlöslicher Salze eines Metalls der Gruppen II a, II b, III a oder VIII des periodischen Systems der Elemente in Mengen von 0, 5 - 6,5, in neueren Patenten (DE 198 15 453; DE 198 16 972) 10 phr zur Füllstoffsuspension.

Diese Gruppeneinteilung entspricht der IUPAC-Empfehlung (siehe Periodisches System der Elemente, Verlag Chemie, Weinheim, 1985). Typische Vertreter sind Magnesiumchlorid, Zinksulfat, Aluminiumchlorid, Aluminiumsulfat, Eisenchlorid, Eisensulfat Kobaltnitrat und Nickelsulfat, wobei die Salze des Aluminiums insbesondere Aluminiumsulfat bevorzugt sind.

Ebenfalls unabläßlich ist die Gegenwart von Alkalisilikat in Mengen von bis zu 5 phr.

Sämtliche dieser in großen Mengen bei der Herstellung des Pulverkautschukes zugegebenen nicht gummispezifischen Stoffe müssen jedoch als unnötige, gegebenenfalls sogar als schädliche Produktbestandteile angesehen werden. Es ist daher das Ziel Kautschuk/Füllstoff-Batches soweit möglich nur mit gummitechnisch erwünschten bzw. die Vulkanisatleistung fördernden oder zumindest nicht negativ beeinflussenden Stoffen herzustellen; WO 99/16600.

Neben dem partiellen Einbau dieser gummifremden Stoffe in das Produkt bleibt ein großer Teil auch im Fällwasser zurück und stellt damit ein umwelttechnisch bedenkliches Gefahrenpotential dar. Mit anderen Worten es ist u.U. eine aufwendige Aufarbeitung des Abwassers notwendig.

Ziel der Erfindung ist daher die Entwicklung eines Fäll- und Herstellverfahrens, das frei von unerwünschten o.g. Nebenbestandteilen ist und dabei die sonstigen Anforderungen an das Produkt, wie die Beherrschung der Klebrigkeit, sowie ausgezeichnete gummitechnische Eigenschaften erfüllt. Die Aufgabe wurde gemäß der Patentansprüche gelöst.

Die Erfindung beschreibt ein neuartiges Verfahren zur Herstellung von pulverförmigen, freifließenden Kautschuk/Füllstoff-Batches, das durch folgende Vorgehensweise gekennzeichnet ist.

Zu Beginn der Herstellung der erfindungsgemäßen Pulverkautschuke wird der Gesamtfüllstoff in drei Partien geteilt. Kernruß, Splittingruß 1 und Splittingruß 2. Der Kernruß, der etwa 30 - 60 % des Gesamtrußes eines Fertigproduktes ausmacht, wird in Wasser dispergiert. Die Menge des insgesamt eingesetzten Wassers richtet sich nach der Art des Füllstoffs und dem Aufschlussgrad. Im allgemeinen liegen die nicht wasserlöslichen Bestandteile des Füllstoffs bei 1 - 10 %, bevorzugt 4 - 7 %. Der Füllstoffgehalt der Suspension wirkt nach Wegfall der o.g. zweiwertigen Salze als ein Regulator für die spätere gewünschte Korngrößenverteilung des Endproduktes. In der Regel führt eine höhere Suspensionsdichte zu einem gröberen Produkt und umgekehrt.

Von der Herstellung dieser Füllstoffsuspensionen lassen sich nun zwei verschiedene Fällvorgehensweisen ableiten.

### 1. Fällung mit dem Fällrohr (halbkontinuierliche Fällweise)

Hierzu wird die oben beschriebene Füllstoffsuspension bestehend aus dem Kernruß bereits auf den End-pH-Wert der Fällung von 2,5 - 6, bevorzugt 3,8 - 5,5, mittels einer Brönstedsäure, bevorzugt Schwefelsäure, eingestellt und anschießend mit dem Latex in einem Rohrreaktor zusammengefahren. Dabei wird die Koagulation des Latex ausgelöst, die Bildung des Pulverkautschukkorns initiiert und das sich aufbauende Korn in einem Tank aufgefangen.

Gleichzeitig wird eine wässrige Suspension mit einem pH-Wert von 7 - 9,5, bevorzugt 7,5 - 8,5, aus dem zweiten Teil des Rußes (Splittingruß 1) bestehend aus 30 - 60 % des Gesamtrußes zu dem sich im Auffangbehälter aufbauenden Pulverkautschukkorn kontinuierlich zugeführt. Ebenfalls parallel hierzu wird der pH-Wert der Pulverkautschuksuspension durch kontinuierliche Zugabe von 10 %iger Schwefelsäure auf den gewünschten End-pH-Wert der Fällung, d.h. zwischen 2,5 - 6, bevorzugt 3,8 - 5,5, gehalten und die Fällung unter diesen Bedingungen zu Ende geführt. Durch die kontinuierliche Zuführung des Splittingrußes wird die Korngröße des Pulverkautschuk gesteuert.

Nach Beendigung der Fällung wird der dritte Teil des Rußes (Splittingruß 2) der 5 - 15 % des Gesamtrußes ausmacht als Füllstoffsuspension zur wässrigen Pulverkautschuksuspension hinzugefügt und gegebenenfalls mittels Schwefelsäure erneut der End-pH-Wert im o.g. Bereich eingestellt.

### 2. Premix-Fällung

Zunächst wird eine Füllstoffsuspension in der Weise hergestellt, dass man einen Teil, vorzugsweise zwischen 50 - 98 % des im Endprodukt enthaltenen Füllstoffs in Wasser dispergiert. Die Suspensionsdichte beläuft sich je nach Art des Füllstoffs und Aufschlußgrades zwischen 1 - 10 %, bevorzugt zwischen 4 - 7 %. Der pH-Wert der Suspension liegt hierbei zwischen 7 - 9,5, bevorzugt 7,5 - 9.

Diese so hergestellte Füllstoffsuspension wird zusammen mit der gesamten Kautschuk-Latex-Emulsion in einen Fälltank vorgelegt und dabei heftig gerührt. Anschließend wird durch Zuführung einer 10 %igen H₂SO₄-Lösung die Fällung durchgeführt und dabei der End-pH-Wert der Fällsuspension in einem Bereich von 2,5 - 6, bevorzugt 3,8 - 5,5, angefahren. Anschließend wird der Splittingruß 1 (2 - 50 % des Gesamtrußes), ebenfalls im Wasser suspendiert, zugegeben und gegebenenfalls der pH-Wert mittels H₂SO₄ erneut justiert.

Das Kautschukpulver wird im allgemeinen bei einer Temperatur zwischen 10 und 60°C gefällt, insbesondere bei einer Umgebungstemperatur von 20 bis 35°C.

Als Kautschuktypen geeignet haben sich folgende Spezies gezeigt, einzeln oder im Gemisch miteinander:
Emulsions-SBR, Acrylnitril-Kautschuk, in wässriger Emulsion polymerisierter Butadienkautschuk sowie Naturkautschuk.

Beim Naturkautschuk stellt der sogenannte "field latex" mit Mooney-Vikositäten von 50 - 120 Mooney-Einheiten, insbesondere 55 - 75 Mooney-Einheiten, eine besonders geeignete Form des Naturkautschuks dar.

Der Feststoffgehalt der eingesetzten Kautschuk-Emulsionen beläuft sich im allgemeinen auf 15 - 65 %, bevorzugt zwischen 20 - 30 %.

Als Füllstoffe dienen die aus der Kautschukverarbeitung bekannten Ruße.

Dazu gehören Furnaceruße, Gas- und Flammruße mit einer Jodadsorptionszahl 5 bis 1000 m 2/g, einer CTAB-Zahl von 15 bis 600 m²/g, einer DBP-Adsorption von 30 bis 400 ml/100g und einer 24 M4 DBP-Zahl von 50 bis 370 ml/100 g in einer Menge von 5 bis 250 Teilen, insbesondere 20 bis 150 Teilen, auf 100 Teile Kautschuk, insbesondere 40 bis 100 Teile.

In einer besonderen Ausführungsform enthalten die erfindungsgemäßen Produkte Ruße gemäß der Anmeldung DE 198 40 663 mit gegenüber Standardrußen verbesserten dynamischen Eigenschaften.

Die Gesamtmenge an Füllstoff beläuft sich in diesem Fall auf 20 bis 250 Teile Füllstoff pro 100 Teile Kautschuk. Die erfindungsgemäßen Kautschukpulver können neben den bereits genannten Rußfüllstoffen auch gefällte Kieselsäuren und Naturfüllstoffe, Organosilane und gegebenenfalls bekannte Verarbeitungs- oder Vulkanisationshilfsmittel wie Zinkoxid, Zinkstearat, Stearinsäure, Polyalkohole, Polyamine, Weichmacher, Alterungsschutzmittel gegen Wärme, Licht oder Sauerstoff und Ozon, Verstärkerharze, Flammschutzmittel wie z.B. Al(OH)₃ und Mg(OH)₂, Pigmente, verschiedene Vernetzungschemikalien und gegebenenfalls Schwefel in den gummitechnisch üblichen Konzentrationen enthalten.

Die gemäß oben beschriebener Herstellweise erhaltenen in Wasser befindlichen Kautschukpulver werden anschließend mechanisch zum großen Teil entwässert. Vorteilhaft haben sich hierbei als Aggregat eine Zentrifuge oder ein Vakuumbandfilter erwiesen.

Im Abschluss erfolgt ein thermischer Trocknungsvorgang bis auf eine Restfeuchte ≤ 3 %, bevorzugt ≤ 1 %, insbesondere in einem Wirbelbetttrockner.

In einer besonderen Ausführungsform hat es sich vorteilhaft erwiesen, das fertige, getrocknete Kautschukpulver zur weiteren Reduzierung der Klebrigkeit mit geeigneten in der Gummiindustrie eingesetzten Produkten zu pudern, d.h. trocken zu coaten. Als geeignet erwiesen sich u.a. Stearinsäure, Kieselsäuren und insbesondere Zinkoxid in Mengen von 0,1 - 3 phr, insbesondere 0,25 - 1 phr. Das Aufbringen der Coatingschicht auf das Pulverkautschukkorn erfolgt in geeigneten Pulvermischern, d.h. unter Vermeidung von Scherung, um das Korn nicht zu zerstören.

Die aufgebrachte Coatingschicht ermöglicht insbesondere eine Lagerung über längere Zeiträume bei höherer Verdichtung der Produktes, z.B. im Silo, ohne dass es zu Verklebungen kommt.

Die erfindungsgemäßen Kautschukpulver werden zur Herstellung vulkanisierbarer Kautschukmischungen verwendet. Dabei können die zur Mischungsherstellung notwendigen Bestandteile sämtlich im Kautschukpulver enthalten sein. Bevorzugt enthalten diese jedoch Kautschuk der oben aufgeführten Typen und Füllstoffe. Sie können jedoch auch mit anderen Kautschuken und Füllstoffen konventionell vermischt werden, wenn dies für die gewünschte Kautschukmischung erforderlich ist.

Die erfindungsgemäßen, feinteiligen Kautschukpulver lassen sich leicht verarbeiten, führen in der Gummimischung zu exzellenten Dispersionen und zu Vulkanisaten mit verbesserten Eigenschaften.

### Herstellungsbeispiele

### I. NR/N234 47 phr Füllgrad als Rohrfällung

Unter Rühren wird aus 14,1 kg N234 und 352 L Wasser eine stabile Dispersion mit einem Feststoffgehalt von 4 % hergestellt. Die Rußsuspension wird anschließend im Verhältnis 50 (Kernruß) : 40 (Splitting 1) : 10 (Splitting 2) aufgeteilt. Die beiden Splittingruße werden in den jeweiligen hierfür vorgesehenen Splittingbehälter gefahren.

Die Rußsuspension mit dem Kernruß wird anschließend auf pH 5 mittels 10 %iger H₂SO₄ eingestellt und die so behandelte Rußsuspension zusammen mit dem Latex zum Fällrohr gefahren. Gleichzeitig wird aus dem Splittingbehälter Splitting 1 über eine Pumpe in den Auffangbehälter für das entstehende Pulverkautschukkorn zugefahren. Parallel wird der pH-Wert der Pulverkautschuksuspension, der durch die Zugabe des alk. Splittingrußes (pH ca. 9) ansteigen würde, konstant auf pH 5 (H₂SO₄) gehalten. Nach dem Ende des Fällvorgangs wird Splitting 2 zugefahren und auch hierbei der pH-Wert durch Zugabe von H₂SO₄ auf 5 gehalten. Nach einer Reifezeit von ca. 2 Std. wird der Pulverkautschuk mechanisch entwässert und anschließend auf ≤ 1 % heruntergetrocknet.

### II. E-SBR / N234 76 phr Füllgrad Premixfällung

Unter Rühren wird aus 26.6 kg N234 und 532 L Wasser eine 5 %ige Rußsuspension hergestellt. Anschließend wird die Suspension im Verhältnis 80 (Kernruß) : 20 (Splittingruß) aufgeteilt. Latex und Kernruß werden zum Fällbehälter gefahren und durch Zugabe von 10 %iger H₂SO₄ auf pH 4 eingestellt. Nach Fällende wird Splittingruß zugefahren und der pH-Wert der Pulverkautschuksuspension erneut auf pH 4 mittels H₂SO₄ justiert. Anschließend, gegebenenfalls nach einer Reifezeit, wird der größte Teil des Wassers mechanisch abgetrennt und anschließend das feuchte Produkt auf eine Restfeuchte ≤ 1 % getrocknet.

Um die Klebrigkeit des trockenen Produktes weiter zu reduzieren wird das Produkt mit 0,5 phr ZnO nachträglich im Pulvermischer gecoatet.

### Beispiele

### A) Eingesetzte Rohstoffe

| 1) Rohstoffe für die Pulverkautschukherstellung | |
|---|---|
| Corax N 234 | Furnaceruß der Degussa-Hüls mit einer J₂-Adsorption von 120 mg/g |
| NR Feld-Latex | Latex mit einer Mooney-Viskosität von ∼ 55-60 stabilisiert mit ZnO / TMTD / NH₃ der Inter Rubber Latex Co. Der Latex liegt ca. 30 %ig in Wasser vor. |
| E-SBR 1500 | Latex mit einer Mooney-Viskosität von ∼42 der BSL. Der Latex liegt ca. 20 %ig in Wasser vor. |

| 2) Bestandteile der Gummimischungen | |
|---|---|
| SMR 10 | Standard Malaysian Rubber; Naturkautschuk |
| 6PPD | N-(1,3-Dimethylbutyl)-N'-phenyl-p-phenylendiamin |
| TMQ | 2,2,4-Trimethyl-1,2-dihydro-chinolin |
| Protektor G35 | Mischung aus raffinierten Kohlenwasserstoffwachsen |
| Stearinsäure | Mischung aus C₁₂₋₁₈ -Monocarbonsäuren |
| ZnO RS | Zinkoxid Rotsiegel |
| TBBS | N-tert.Butyl-2-benzthiazylsulfenamid |
| CTP | N-Cyclohexylthiophtalimid |

| B) Gummitechnische Prüfmethoden | |
|---|---|
| Zugversuch am Stab | DIN 53 504 |
| Shore Härte | DIN 53 505 |
| Weiterreißwiderstand | DIN 53 507 |
| Abrieb | DIN 53 516 |
| Dispersion (Rauhigkeit) | DIN 47 88 |

### 1) Vergleich des gummitechnischen Wertebildes des erfindungsgemäßen Produktes (Herstellbeispiel 1) NR/Ruß gegen eine Standardmischung

| | 1 | 2 |
|---|---|---|
| SMR 10 (ML 1+4 70-80) | 100 | - |
| PR I ^{*} | - | 150 |
| N 234 | 50 | - |
| 6PPD | 1 | 1 |
| TMQ | 1,5 | 1,5 |
| ZnO RS | 4 | 4 |
| Stearinsäure | 2 | 2 |
| Wachs | 1 | 1 |
| TBBS | 1,2 | 1,2 |
| CTP | 0,15 | 0,15 |
| Schwefel | 1,4 | 1,4 |

| | | |
|---|---|---|
| * 100 Teile NR-Latex, 47 Teile N234 Fluffy | | |

### 2) Mischvorschrift

### 1. Stufe

| | | | | | |
|---|---|---|---|---|---|
| Innenmischer : GK 1,5 E; Volumen 1,6 L; Friktion 1:1; Stempel 5,5 bar | | | | | |
| Mischung | | | 1 | | 2 |
| Füllgrad | | | 0,55 | | 0,7 |
| RPM | | [¹/min] | 70 | | 70 |
| Kammertemperatur | | [°C] | 80 | | 80 |
| 0 - 2' | Polymer, Ruß, ZnO RS, Stearinsäure, Wachs | | 0 - 2' | PK, ZnO RS, Stearinsäure, Wachs | |
| 2 - 4' | 6 PPD, TMQ, | | 2 - 4' | 6 PPD, TMQ, | |
| 4' | Ausstoßen | | 4' | Ausstoßen | |
| Ausstoßtemperatur ~ 150°C | | | Ausstoßtemperatur ~ 150°C | | |

### 2. Stufe

| Innenmischer : GK 1,5 E; Volumen 1,6 L; Friktion 1:1; Stempel 5,5 bar; RPM 40; Füllgrad 0,55; Durchflußtemperatur 50°C | | | |
|---|---|---|---|
| 0 - 2' | Batch Stufe 1, Beschleuniger, Schwefel | 0 - 2' | Batch Stufe 1, Beschleuniger, Schwefel |
| 2' | Ausstoßen | 2' | Ausstoßen |
| Ausstoßtemperatur ~ 100°C | | Ausstoßtemperatur ~ 100°C | |

### c) Gummitechnische Eigenschaften

| Mischungsnummer | | 1 | 2 |
|---|---|---|---|
| Dₘₐₓ-Dₘᵢₙ | [dNm] | 13,54 | 14,77 |
| Zugfestigkeit | [MPa] | 17,3 | 17,1 |
| Modul 300% | [MPa] | 8 | 8,8 |
| Shore-A-Härte | [SH] | 70 | 73 |
| Weiterreißwiderstand | [N/mm] | 49 | 51 |
| Dispersion [Rauhigkeit] | [%] | 8,6 | 1,1 |

Das erfindungsgemäße Produkt zeigt Vorteile in Modul, besonders jedoch in DIN Abrieb und in Dispersionswerten.

## Patentansprüche

1. Verfahren zur Herstellung feinteiliger, pulverförmiger und füllstoffhaltiger Kautschuke auf der Basis von Kautschuk-Latex-Emulsionen durch Ausfällen aus wasserhaltigen Mischungen,
**dadurch gekennzeichnet,**
**dass** die Ausfällung in Abwesenheit von wasserlöslichen Salzen von Metallen der Gruppen II a, II b, III a oder VIII des periodischen Systems der Elemente sowie Alkalisilikat erfolgt, bei dem zunächst der Gesamtfüllstoff in Kernruß, Splittingruß 1 und Splittingruß 2 aufgeteilt wird, wobei der Kernruß in Wasser dispergiert, die nicht wasserlöslichen Bestandteile des Füllstoffes betragen zwischen 1 bis 10 %, und bereits auf den End-pH-Wert der Fällung von 2,5 bis 6 mittels einer Brönstedsäure eingestellt und anschließend mit dem Latex in einem Rohrreaktor zusammengefahren wird, wobei die Koagulation des Pulverkautschukkorns initiiert und das sich aufbauende Korn in einem Tank aufgefangen wird, gleichzeitig wird eine wäßrige Suspension des Splittingruß 1 mit einem Feststoffgehalt zwischen 1 und 10 % und einem pH-Wert von 7 bis 9,5 dem sich im Auffangbehälter aufbauenden Pulverkautschukkorn kontinuierlich zugeführt, parallel dazu wird der gewünschte End-pH-Wert der Pulverkautschuksuspension kontinuierlich mittels einer Säure zwischen 2,5 bis 6 gehalten, wobei die Korngröße des Pulverkautschuks durch die kontinuierliche Zuführung des Splittingrußes gesteuert wird, nach Beendigung der Fällung wird Splittingruß 2 als Füllstoffsuspension, mit einem Feststoffgehalt zwischen 1 und 10 %, zur wäßrigen Pulverkautschuksuspension hinzugefügt und gegebenenfalls der End-pH-Wert mittels einer Säure zwischen 2,5 bis 6 gehalten.

2. Verfahren gemäß Ansprüch 1,
**dadurch gekennzeichnet,**
**dass** sich der Gesamtruß aus dem Kernruß von 30 bis 60 Gew.-%, dem Splittingruß 1 von 30 bis 60 Gew.-% und dem Splittingruß 2 von 5 bis 15 Gew.-% zusammensetzt.

3. Verfahren gemäß einem der vorhergehenden Ansprüche,
**dadurch gekennzeichnet,**
**dass** die pH-Werte mittels Schwefelsäure eingestellt werden.

4. Verfahren zur Herstellung feinteiliger, pulverförmiger und füllstoffhaltiger Kautschuke auf der Basis von Kautschuk-Latex-Emulsionen durch Ausfällen aus wasserhaltigen Mischungen,
**dadurch gekennzeichnet,**
**dass** die Ausfällung in Abwesenheit von wasserlöslichen Salzen von Metallen der Gruppen II a, II b, III a oder VIII des periodischen Systems der Elemente sowie Alkalisilikat erfolgt, bei dem zunächst 50 bis 98 Gew.-% des Gesamtfüllstoffes in Wasser dispergiert, die Suspensionsdichte beträgt 1 bis 10 %, der pH-Wert liegt zwischen 7 bis 9,5, danach diese Suspension mit dem Latex in einem Fälltank vorgelegt und heftig gerührt wird, wobei durch Zuführung einer Säure die Fällung durchgeführt und dabei der End-pH-Wert der Fällsuspension in einem Bereich von 2,5 bis 6 angefahren wird und anschließend die restlichen 2 bis 50 Gew.-% des Gesamtfüllstoffes, ebenfalls in Wasser suspendiert, mit einem Feststoffgehalt zwischen 1 und 10 %, zugegeben werden, wobei gegebenenfalls der pH-Wert erneut justiert wird.

5. Verfahren gemäß Ansprüch 4,
**dadurch gekennzeichnet,**
**dass** die pH-Werte mittels Schwefelsäure eingestellt werden.

6. Verfahren gemäß einem der vorhergehenden Ansprüche,
**dadurch gekennzeichnet,**
**dass** die Kautschukpulver bei Temperaturen zwischen 10 und 60° C gefällt werden.

7. Verfahren gemäß einem der vorhergehenden Ansprüche,
**dadurch gekennzeichnet,**
**dass** als Kautschuk einzeln oder im Gemisch miteinander Emulsions-SBR, Acrylnitril-Kautschuk, in wäßriger Emulsion polymerisierte Butadienkautschuk sowie Naturkautschuk eingesetzt wird.

8. Verfahren gemäß einem der vorhergehenden Ansprüche,
**dadurch gekennzeichnet,**
**dass** als Naturkautschuk field latex mit Mooney-Viskositäten von 50 bis 120 eingesetzt wird.

9. Verfahren gemäß einem der vorhergehenden Ansprüche,
**dadurch gekennzeichnet,**
**dass** der Feststoffgehalt der eingesetzten Kautschukemulsionen zwischen 15 und 65 % liegt.

10. Verfahren gemäß einem der vorhergehenden Ansprüche,
**dadurch gekennzeichnet,**
**dass** als Füllstoffe die aus der Kautschukverarbeitung bekannten Ruße verwendet werden.

11. Verfahren gemäß einem der vorhergehenden Ansprüche,
**dadurch gekennzeichnet,**
**dass** als Ruße Furnaceruße, Gas- und Flammruße mit einer Jodadsorptionszahl 5 bis 1000 m 2/g, einer CTAB-Zahl von 15 bis 600 m²/g, einer DBP-Adsorption von 30 bis 400 ml/100g und einer 24 M4 DBP-Zahl von 50 bis 370 ml/100 g in einer Menge von 5 bis 250 Teilen auf 100 Teile Kautschuk eingesetzt werden.

12. Verfahren gemäß einem der vorhergehenden Ansprüche,
**dadurch gekennzeichnet,**
**dass** Ruße mit verbesserten dynamischen Eigenschaften in einer Menge von 20 bis 250 Teile Füllstoff pro 100 Teile Kautschuk eingesetzt werden.

13. Verfahren gemäß einem der vorhergehenden Ansprüche,
**dadurch gekennzeichnet,**
**dass** die Kautschukpulver neben den Rußfüllstoffen weitere übliche Verarbeitungs- oder Vulkanisationshilfsmittel in den gummitechnisch üblichen Konzentrationen enthalten.

14. Verfahren gemäß einem der vorhergehenden Ansprüche,
**dadurch gekennzeichnet,**
**dass** die nach der Herstellung sich in Wasser befindlichen Kautschukpulver mechanisch entwässert werden.

15. Verfahren gemäß einem der vorhergehenden Ansprüche,
**dadurch gekennzeichnet,**
**dass** nach der Entwässerung der Kautschukpulver ein thermischen Trocknungsvorgang bis zu einer Restfeuchte ≤ 3 % erfolgt.

16. Verfahren gemäß einem der vorhergehenden Ansprüche,
**dadurch gekennzeichnet,**
**dass** das fertige, getrocknete Kautschukpulver zur Reduzierung der Klebrigkeit trocken gecoatet wird.

17. Verfahren gemäß einem der vorhergehenden Ansprüche,
**dadurch gekennzeichnet,**
**dass** das Aufbringen des Coatingmaterials in Mengen von 0,1 bis 3 phr in Pulvermischern unter Vermeidung von Scherung erfolgt.

18. Verfahren gemäß einem der vorhergehenden Ansprüche,
**dadurch gekennzeichnet,**
**dass** als Coatingmaterial Stearinsäure, Kieselsäure und Zinkoxid verwendet wird.

19. Feinteiliger, pulverförmiger und füllstoffhaltiger Kautschuk erhältlich nach dem Verfahren gemäß einem der vorhergehenden Ansprüche.

20. Verwendung des feinteiligen, pulverförmigen und füllstoffhaltigen Kautschuks gemäß Ansprüch 19 zur Herstellung vulkanisierbarer Kautschukmischungen.

## Claims

1. A process for preparing fine-particle, pulverulent, filled rubbers from rubber-latex emulsions, by precipitation from aqueous mixtures, **characterized in that** the precipitation is carried out in the absence of water-soluble salts of metals of Groups IIa, IIb, IIIa or VIII of the Periodic Table of the Elements, and also of alkali metal silicate, and in which first the entirety of the filler is divided up into core black, splitting black 1 and splitting black 2, where the core black disperses in water, the water-insoluble constituents of the filler amount to from 1 to 10%, and a Brönsted acid is used to adjust to the final pH of the precipitation, from 2.5 to 6, and the core black is then run through a tubular reactor together with the latex, whereupon the coagulation of the rubber powder grains is initiated and the grains formed are collected in a tank, and simultaneously an aqueous suspension of splitting black 1 with a solids content of from 1 to 10% and with a pH of from 7 to 9.5 is continuously fed to the rubber powder grains formed in the collector, and in parallel with this an acid is used to maintain the desired final pH of the rubber powder suspension continuously at from 2.5 to 6, the grain size of the rubber powder being controlled by the continuous feed of the splitting black, and, once the precipitation has ended, splitting black 2 is added to the aqueous rubber powder suspension as a suspension of filler with a solids content of from 1 to 10% and, if desired, an acid is used to maintain the final pH at from 2.5 to 6.

2. A process according to claim 1 **characterized in that** the entirety of the carbon black is composed of from 30 to 60% by weight of core black, from 30 to 60% by weight of splitting black 1 and from 5 to 15% by weight of splitting black 2.

3. A process according to any one of the preceding claims, **characterized in that** sulphuric acid is used to adjust the pHs.

4. A process for preparing fine-particle, pulverulent, filled rubbers from rubber-latex emulsions, by precipitation from aqueous mixtures, **characterized in that** the precipitation is carried out in the absence of water-soluble salts of metals of Groups IIa, IIb, IIIa or VIII of the Periodic Table of the Elements, and also of alkali metal silicate, and in which first from 50 to 98% by weight of the entirety of the filler disperses in water, the solids content in the suspension is from 1 to 10%, the pH is from 7 to 9.5, and then this suspension forms an initial charge with the latex in a precipitation tank and is vigorously stirred, whereupon the precipitation is carried out by adding an acid, and the final pH of the precipitation suspension here is brought within a range from 2.5 to 6, and then the remaining 2 - 50% by weight of the entirety of the filler, likewise suspended in water, are added with a solids content of from 1 to 10%, if desired again adjusting the pH.

5. A process according to claim 4, **characterized in that** sulphuric acid is used to adjust the pHs.

6. A process according to any one of the preceding claims, **characterized in that** the rubber powders are precipitated at temperatures of from 10 to 60°C.

7. A process according to any one of the preceding claims, **characterized in that** the rubber used comprises, individually or in a mixture with one another, emulsion SBR, acrylonitrile rubber, aqueous-emulsion-polymerized butadiene rubber, or else natural rubber.

8. A process according to any one of the preceding claims, **characterized in that** the natural rubber used comprises field latex with a Mooney viscosity of from 50 to 120.

9. A process according to any one of the preceding claims, **characterized in that** the solids content of the rubber emulsions used is from 15 to 65%.

10. A process according to any one of the preceding claims, **characterized in that** the fillers used comprise the carbon blacks known from rubber processing.

11. A process according to any one of the preceding claims, **characterized in that** the carbon blacks used comprise furnace blacks, gas blacks and flame blacks with an iodine adsorption value of from 5 to 1000 m²/g, a CTAB number of from 15 to 600 m²/g, a DBP adsorption of from 30 to 400 ml/100 g and a 24 M4 DBP number of from 50 to 370 ml/100 g, in amounts of from 5 to 250 parts for each 100 parts of rubber.

12. A process according to any one of the preceding claims, **characterized in that** use is made of carbon blacks with improved dynamic properties, in amounts of from 20 to 250 parts of filler per 100 parts of rubber.

13. A process according to any one of the preceding claims, **characterized in that** besides the carbon black fillers, the rubber powders comprise customary processing or vulcanizing auxiliaries in the concentrations customary in rubber technology.

14. A process according to any one of the preceding claims, **characterized in that** the rubber powders which after the preparation process are present in water are dewatered by mechanical means.

15. A process according to any one of the preceding claims, **characterized in that** after dewatering of the rubber powders, drying with heat takes place until residual moisture is ≤ 3%.

16. A process according to any one of the preceding claims, **characterized in that** the finished, dried rubber powder is dry-coated to reduce tack.

17. A process according to any one of the preceding claims, **characterized in that** from 0.1 to 3 phr of the coating material is applied in powder mixers, avoiding the use of shear.

18. A process according to any of the preceding claims, **characterized in that** the coating material used comprises stearic acid, silica or zinc oxide.

19. A fine-particle, pulverulent, filled rubber obtainable by a process according to any one of the preceding claims.

20. The use of a fine-particle, pulverulent, filled rubber according to claim 19 for preparing vulcanizable rubber mixtures.

## Revendications

1. Procédé de fabrication de caoutchoucs contenant des charges finement divisés et pulvérulents à base d'émulsions de caoutchouc/latex par précipitation à partir de mélanges contenant de l'eau,
**caractérisé en ce que**
la précipitation s'effectue en l'absence de sels solubles dans l'eau de métaux des groupes II a, II b, III a ou VIII du système périodique des éléments et de silicate alcalin, dans lequel la totalité des charges d'abord est divisée en noir de noyau, noir de clivage 1 et noir de clivage 2, le noir de noyau étant dispersé dans de l'eau, les constituants de la charge non solubles dans l'eau s'élevant de 1 à 10 %, et un pH final de la précipitation de 2,5 à 6 étant déjà réglé au moyen d'un acide de Brönsted, puis elle est conduite dans un réacteur tubulaire avec le latex, la coagulation du grain de caoutchouc pulvérulent s'initiant, et le grain en constitution étant intercepté dans un réservoir, simultanément, une suspension aqueuse du noir de clivage 1 avec une teneur en solides entre 1 et 10 % et un pH de 7 à 9,5 est ajoutée en continu au grain de caoutchouc pulvérulent en constitution dans le réservoir d'interception, en parallèle à cela, le pH final souhaité de la suspension de caoutchouc pulvérulent est maintenu continuellement entre 2,5 et 6 au moyen d'acide, la grosseur de grain du caoutchouc pulvérulent étant déterminée par l'amenée en continu du noir de clivage, on ajoute à la fin de la précipitation, du noir de clivage 2 sous forme de suspension de charges, présentant une teneur en solides entre 1 et 10 %, à la suspension de caoutchouc pulvérulent aqueuse et le cas échéant le pH final est maintenu au moyen d'un acide entre 2,5 et 6.

2. Procédé selon la revendication 1,
**caractérisé en ce que**
le noir total est composé du noir de noyau pour 30 à 60 % en poids, du noir de clivage 1 pour 30 à 60 % en poids et du noir de clivage 2 pour 5 à 15 % en poids.

3. Procédé selon l'une quelconque des revendications précédentes,
**caractérisé en ce que**
les pH sont réglés avec de l'acide sulfurique.

4. Procédé de fabrication de caoutchoucs contenant des charges finement divisés et pulvérulents à base d'émulsions caoutchouc-latex par précipitation de mélanges contenant de l'eau,
**caractérisé en ce que**
la précipitation s'effectue en l'absence de sels solubles dans l'eau de métaux des groupes II a, II b, III a ou VIII du système périodique des éléments et de silicate alcalin, dans lequel on disperse d'abord 50 à 98 % en poids de la totalité des charges dans de l'eau, la densité de la suspension s'élève de 1 à 10 %, le pH se situe entre 7 et 9,5, puis cette suspension est déposée avec le latex dans un réservoir de précipitation et est vigoureusement agitée, la précipitation s'effectuant par amenée d'un acide et le pH final de la suspension de précipitation commençant à un intervalle de 2,5 à 6, puis les autres 2 à 50 % en poids des charges totales, également en suspension dans de l'eau, étant ajoutées avec une teneur en solides entre 1 et 10 %, le pH étant le cas échéant à nouveau réglé.

5. Procédé selon la revendication 4,
**caractérisé en ce que**
les pH sont réglés au moyen d'acide sulfurique.

6. Procédé selon l'une quelconque des revendications précédentes,
**caractérisé en ce que**
la poudre de caoutchouc précipite à des températures entre 10 et 60°C.

7. Procédé selon l'une quelconque des revendications précédentes,
**caractérisé en ce qu'**
on utilise comme caoutchouc seul ou en mélange les uns avec les autres une émulsion de SBR, de l'acrylonitrile-caoutchouc, du caoutchouc de butadiène polymérisé en émulsion aqueuse et du caoutchouc naturel.

8. Procédé selon l'une quelconque des revendications précédentes,
**caractérisé en ce qu'**
on utilise comme caoutchouc naturel du latex de plantation présentant des viscosités Mooney de 50 à 120.

9. Procédé selon l'une quelconque des revendications précédentes,
**caractérisé en ce que**
la teneur en solides des émulsions de caoutchouc utilisées se situe entre 15 et 65 %.

10. Procédé selon l'une quelconque des revendications précédentes,
**caractérisé en ce qu'**
on utilise comme charges les noirs de carbone connus dans le traitement du caoutchouc.

11. Procédé selon l'une quelconque des revendications précédentes,
**caractérisé en ce qu'**
on utilise comme noirs de carbone des noirs de carbone de fourneau, des noirs de carbone de gaz et de lampe présentant un indice d'adsorption d'iode de 5 à 1 000 m²/g, un indice CTAB de 15 à 600 m²/g, une adsorption DBP de 30 à 400 ml/100 g et un indice DBP 24 M4 de 40 à 370 ml/100 g dans une quantité de 5 à 250 parties pour 100 parties de caoutchouc.

12. Procédé selon l'une quelconque des revendications précédentes,
**caractérisé en ce qu'**
on utilise des noirs de carbone présentant des propriétés dynamiques améliorées dans une quantité de 20 à 250 parties de charge pour 100 parties de caoutchouc.

13. Procédé selon l'une quelconque des revendications précédentes,
**caractérisé en ce que**
les poudres de caoutchouc contiennent outre les charges de noir de carbone d'autres adjuvants habituels de traitement ou de vulcanisation dans des concentrations habituelles à la technique du caoutchouc.

14. Procédé selon l'une quelconque des revendications précédentes,
**caractérisé en ce que**
les poudres de caoutchouc se trouvant dans l'eau après la fabrication sont déshydratées par voie mécanique.

15. Procédé selon l'une quelconque des revendications précédentes,
**caractérisé en ce qu'**
il se produit, après la déshydratation des poudres de caoutchouc, un processus de séchage thermique jusqu'à une humidité résiduelle ≤ 3 %.

16. Procédé selon l'une quelconque des revendications précédentes,
**caractérisé en ce que**
la poudre de caoutchouc séchée finie est revêtue à siccité pour réduire l'adhésivité.

17. Procédé selon l'une quelconque des revendications précédentes,
**caractérisé en ce que**
l'application du matériau de revêtement s'effectue dans des quantités de 0,1 à 3 phr dans des mélangeurs de poudres en évitant un cisaillement.

18. Procédé selon l'une quelconque des revendications précédentes,
**caractérisé en ce qu'**
on utilise comme matériau de revêtement de l'acide stéarique, de l'acide silicique et de l'oxyde de zinc.

19. Caoutchouc finement divisé, pulvérulent et contenant des charges pouvant être obtenu par le procédé selon l'une quelconque des revendications précédentes.

20. Utilisation du caoutchouc finement divisé, pulvérulent et contenant des charges selon la revendication 19, pour la fabrication de mélanges de caoutchoucs pouvant être vulcanisés.
